# EUROPÄISCHE PATENTSCHRIFT

(11) **EP 1 431 610 B1**
(45) Veröffentlichungstag und Bekanntmachung des Hinweises auf die Patenterteilung: **12.11.2008**
(21) Anmeldenummer: 03029097.7
(22) Anmeldetag: 18.12.2003
(51) Int. Cl.: F16F 15/131, F16F 15/30, F16D 3/77

(54) **Zweimassenschwungrad**
Dual-mass flywheel
Volant à deux masses

(30) Priorität: 19.12.2002 DE 10260120; 06.03.2003 DE 10310045
(43) Veröffentlichungstag der Anmeldung: 23.06.2004
(73) Patentinhaber: LuK Lamellen und Kupplungsbau Beteiligungs KG, 77815 Bühl (DE)
(72) Erfinder: Jäckel, Johann, 77830 Bühlertal (DE); Berger, Reinhard, Dr., 77815 Bühl (DE); Junk, Andreas, 23966 Wismar (DE)

(56) Entgegenhaltungen:
- EP-A- 0 717 211
- EP-A- 0 984 184
- EP-A- 1 099 877
- EP-B- 0 749 542
- GB-A- 1 153 305
- US-A- 2 982 150
- US-A- 4 624 351

## Beschreibung

Die Erfindung betrifft ein Zweimassenschwungrad mit einer Primärmasse und einer gegenüber dieser verdrehbaren Sekundärmasse, wobei die beiden Massen zumindest über ein Federelement antriebsmäßig gekoppelt sind, wobei das Federelement mittels eines mit der Sekundärmasse verbundenen Flansches beaufschlagbar ist und die Befestigungsbereiche zwischen der Sekundärschwungmasse und dem Flansch radial innerhalb einer Reibfläche der Sekundärschwungmasse vorgesehen sind. Zweimassenschwungräder der hier angesprochenen Art sind bekannt. Sie dienen zur Torsionsschwingungsdämpfung, insbesondere in einem Triebstrang eines Kraftfahrzeugs. Außerdem werden sie zur Kopplung zweier Aggregate, insbesondere einem Motor, vorzugsweise einem Verbrennungsmotor, mit einer Abtriebseinheit, vorzugsweise mit einer Kupplung und/oder einem Getriebe, verwendet. Die bekannten Schwungräder weisen eine auch als Lauffläche bezeichnete Reibfläche auf, die als Kupplungsfläche dient, und einen Befestigungsbereich, der zur Übertragung eines Drehmoments mit anderen Teilen, insbesondere einem Flansch, koppelbar ist. Durch die EP 0 749 542 B1 ist ein Zweimassenschwungrad bekannt geworden mit einer Primärmasse und einer Sekundärmasse, die über Schraubenfedern gekoppelt sind. Die Schraubenfedern sind dabei von einem mit der Sekundärmasse verbundenen Flansch beaufschlagbar. Der Flansch ist mit der Sekundärmasse über Nietverbindungen verbunden, die, in Umfangsrichtung betrachtet, zwischen in der Sekundärmasse vorgesehenen runden Öffnungen angeordnet sind. Es hat sich gezeigt, dass beim Herstellen der Kopplung Materialdeformationen auftreten können, die die Oberflächeneigenschaften der Reibfläche verändern. Die Veränderungen der Reibfläche können dabei so nachhaltig/stark sein, dass deren Eigenschaften als Kupplung nicht mehr akzeptabel sind.

Aufgabe der Erfindung ist es daher, ein Schwungrad und/oder ein ZweimassenSchwungrad zur Verfügung zu stellen, das diesen Nachteil nicht aufweist.

Erfindungsgemäß wird ein Schwungrad vorgeschlagen, das die in Anspruch 1 genannten Merkmale umfasst. Es zeichnet sich durch zumindest eine Entkopplung zwischen Reibfläche und Befestigungsbereich aus, die dadurch erzielt wird, dass die Sekundärschwungmasse radial innerhalb der Reibfläche axiale Durchlässe aufweist und die radial innerhalb dieser Durchlässe vorhandenen Bereiche der Sekundärschwungmasse mit den radial außerhalb dieser Durchlässe vorhandenen Bereichen über radiale Rippen mitein-ander verbunden sind und die Befestigungsbereiche, in Umfangsrichtung des Schwungrades betrachtet, jeweils zwischen zwei radialen Rippen und radial innerhalb der Durchlässe vorgesehen sind. Durch die Entkopplung ist gewährleistet, dass die bei der Herstellung der Verbindung zwischen dem Befestigungsbereich eines Schwungrades und dem Flansch auftretenden Kräfte die Reibfläche nicht beziehungsweise nur in äußerst geringem Maße beeinflussen. Bei der Herstellung der Verbindung zwischen dem Flansch und dem Befestigungsbereich eventuell auftretende Materialverformungen wirken sich also nicht oder nur in einem tolerierbaren Maß auf die Reibfläche aus.

Die Durchlässe können in vorteilhafter Weise durch zwei Durchbrüche, die über einen Luftspalt miteinander verbunden sind, gebildet sein.

Die Befestigungsbereiche können jeweils radial innerhalb eines Luftspaltes angeordnet sein.

Die radial innerhalb der Durchlässe vorhandenen Bereiche können in Umfangsrichtung verlaufende Stege bilden.

Die Stege können übergehen in die radialen Rippen.

In vorteilhafter Weise kann zwischen zwei in Umfangsrichtung aufeinander zuweisenden Stegen ein Befestigungsbereich vorhanden sein, der eine axiale Öffnung zur Herstellung einer Nietverbindung aufweist.

Bevorzugt wird ein Ausführungsbeispiel, das sich dadurch auszeichnet, dass die zumindest eine Entkopplung eine Hülse aufweist, über die die Zuordnung zwischen dem Flansch und dem Befestigungsbereich herstellbar ist. Bei der Verbindung von Flansch und Befestigungsbereich kann in die Hülse der Entkopplung ein Befestigungsmittel eingebracht werden.

Bevorzugt wird außerdem ein Ausführungsbeispiel, das sich dadurch auszeichnet, dass die Hülse zumindest einem Steg zugeordnet ist. Der Steg ist vorzugsweise einstückig mit der Hülse ausgebildet und dient der mechanischen Entkopplung und der Kraftübertragung beziehungsweise der Übertragung eines Drehmoments.

Überdies wird ein Ausführungsbeispiel bevorzugt, das sich dadurch auszeichnet, dass der zumindest eine Steg die Sekundärschwungmasse zugeordnet ist. Der Steg ist vor-zugsweise auch mit der Sekundärschwungmasse einstückig ausgebildet. Die Hülse, über die die Zuordnung der Sekundärschwungmasse zu dem Flansch erfolgt, ist also über den Steg mit der Sekundärschwungmasse gekoppelt, so dass von dem Flansch auf die Sekundärschwungmasse Kräfte beziehungsweise Drehmomente übertragbar sind. Der Steg nimmt die dabei auftretenden Kräfte auf, überträgt diese und dient gleichzeitig der mechanischen Entkopplung.

Es ist außerdem vorgesehen, dass die Hülse dem Flansch zuge-ordnet ist. Über die Hülse lassen sich also von dem Flansch auf die Sekundärschwungmasse Kräfte, insbesondere Drehmomente, übertragen.

Ein weiteres bevorzugtes Ausführungsbeispiel zeichnet sich dadurch aus, dass die Hülse über einen Niet mit dem Flansch verbunden ist. Verbindungen über Nieten benötigen besonders wenig Bauraum und lassen sich auch einfach herstellen.

Besonders bevorzugt wird ein Ausführungsbeispiel, das sich dadurch auszeichnet, dass die zumindest eine Entkopplung zumindest bereichsweise, insbesondere zum Herstellen der Zuordnung, insbesondere eine feste Verbindung, zwischen dem Flansch und dem Schwungrad, elastisch und/oder plastisch verformbar ist.

Hierdurch wird also gezielt die Möglichkeit geschaffen, die bei der Verbindung des Flansches und der Sekundärschwungmasse auftretenden Kräfte durch eine gezielte Materialverformung aufzufangen. Unerwünschte Verformungen in Bereichen, insbesondere im Bereich der Reibfläche, die eine besonders gute Fertigungstoleranz aufweisen müssen, können so sicher vermieden werden.

Besonders bevorzugt wird ein Ausführungsbeispiel, das sich dadurch auszeich-net, dass der zumindest eine Steg über eine Rippe der Sekundärschwungmasse zugeordnet ist. Über die Rippe können auftretende Kräfte, insbesondere Drehmomente, von dem Steg auf die Sekundärschwungmasse übertragen werden. Vorzugsweise sind der Steg und die Rippe und die Sekundärschwungmasse einstückig miteinander ausgebildet, um den Steg mit der Sekundärschwungmasse zu verbinden.

Bei einem weiteren Ausführungsbeispiel der Erfindung ist vorgesehen, dass sich die Rippe radial zur Reibfläche hin konisch erweitert. Die Rippe ist also in Richtung der Reibfläche stabiler ausgebildet. Dies verhindert, dass sich eventuell im Bereich des Stegs auftretende elastische und/oder plastische Verformungen nicht auf die Reibfläche übertragen können.

Weitere Vorteile, Merkmale und Einzelheiten der Erfindung ergeben sich aus der nachfolgenden Beschreibung, in der unter Bezugnahme auf die Zeichnungen ein Ausführungsbeispiel im Einzelnen beschrieben ist. Es zeigen:
- Figur 1: eine Draufsicht auf ein Schwungrad;
- Figur 2: einen Schnitt entlang der Linie II-II des in Figur 1 gezeigten Schwungrades;
- Figur 3a: eine Detailansicht des in Figur 2 dargestellten Schnittes des Schwungrades;
- Figur 3b: eine perspektivische Detailansicht der in Figur 1 dargestellten Draufsicht des Schwungrades;
- Figur 3c: eine Detailansicht der in Figur 1 dargestellten Draufsicht des Schwungrades;
- Figur 4: eine Draufsicht auf einen Teilausbruch eines Zweimassenschwungrades und
- Figur 5: einen Schnitt entlang der Linie V-V des in Figur 4 dargestellten Zweimassenschwungrades.

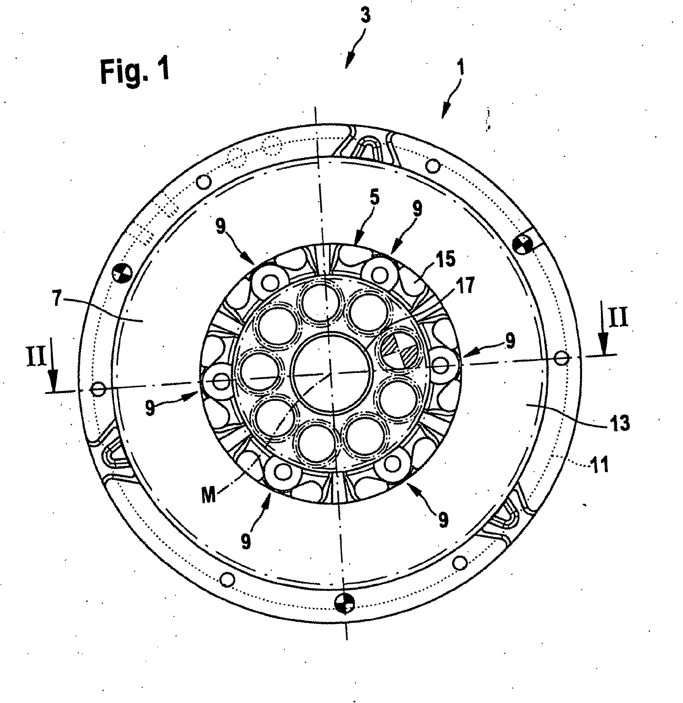

Figur 1 zeigt ein Schwungrad 1, das insbesondere Teil eines Zweimassenschwungrades 3 ist, mit zumindest einem Befestigungsbereich 5 und einer Reibfläche 7.

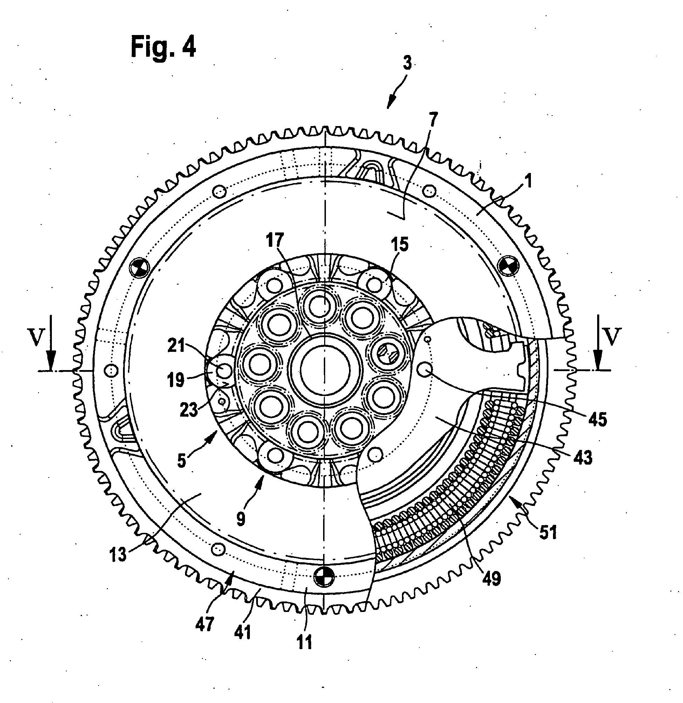

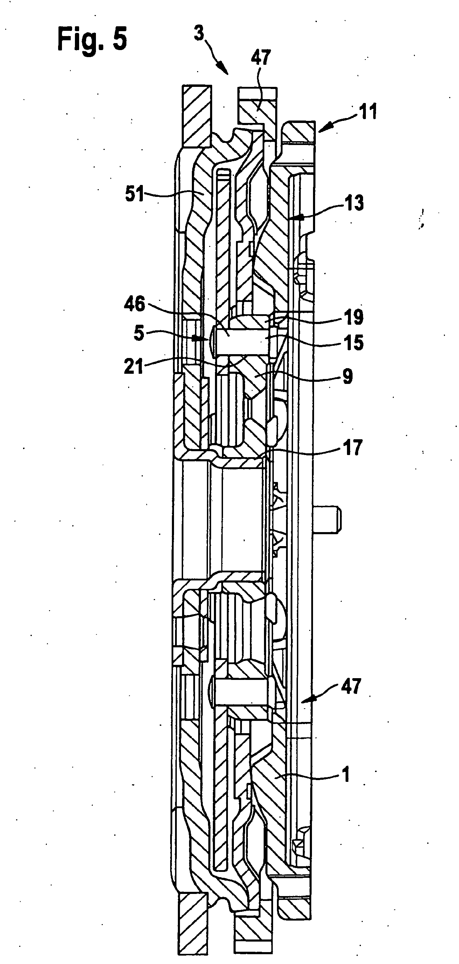

Der Befestigungsbereich 5 weist zumindest eine -hier sechs- Entkopplung(en) 9 auf. Das Schwungrad weist im Wesentlichen vier ringförmige Funktionsbereiche 11, 13, 15, 17 auf. Der erste Funktionsbereich 11 dient zur Anbindung weiterer, hier nicht dargestellter Teile einer Trockenkupplung. Trockenkupplungen sind bekannt, so dass hier nicht weiter darauf eingegangen wird. Der zweite Funktionsbereich 13 ist ebenfalls ein Funktionselement der Trockenkopplung und umfasst die Reibfläche 7, über die in bekannter Art und Weise, insbesondere über einen Reibschluss, ein Drehmoment übertragbar ist. Der dritte Funktionsbereich 15 weist den Befestigungsbereich 5 mit den Entkopplungen 9 auf. Der vierte Funktionsbereich 17 umfasst ein Reiblager zum relativen Verdrehen des Schwungrades 1 entlang der Mittelachse M gegenüber einer weiteren, hier nicht dargestellten rotierenden Masse, auf die in der Beschreibung zu den Figuren 4 und 5 näher eingegangen wird.

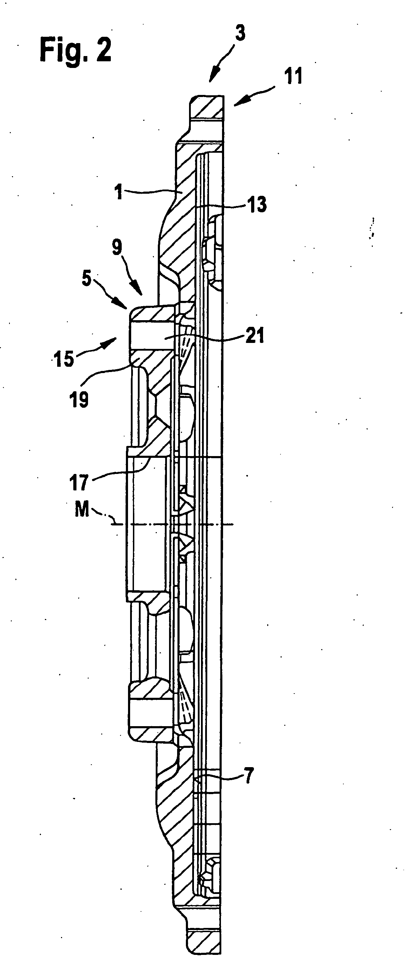

Figur 2 zeigt eine Schnittdarstellung entlang der Linien II-II des in Figur 1 dargestellten Schwungrades 1. Gleiche Teile sind mit gleichen Bezugsziffern versehen, so dass insofern auf die Beschreibung der Figur 1 verwiesen wird.

Da in diesem Ausführungsbeispiel alle sechs Entkopplungen 9 drehsymmetrisch zu einer senkrecht zur Bildebene stehenden Mittelachse M des Schwungrades 1 ausgebildet sind, wird im Folgenden nur eine der Entkopplungen 9 beschrieben.

Zu erkennen ist die Entkopplung 9 mit dem Befestigungsbereich 5, die Teile des dritten Funktionsbereichs 15 des Schwungrades 1 sind. Die Entkopplung 9 weist eine Hülse 19 mit einer Bohrung 21 auf. In die Bohrung 21 kann ein hier nicht dargestellter Niet eingebracht werden, um das Schwungrad 1 einem anderen Teil, insbesondere einem hier nicht dargestellten Flansch, zuzuordnen, so dass Kräfte und/oder Drehmomente übertragbar sind. Der Niet ist insbesondere so in die Bohrung 21 der Hülse 19 eingebracht, dass sich dabei eventuell auftretende elastische und/oder plastische Materialverformungen des Schwungrades 1 nicht auf die als Kopplungsfläche dienende Reibfläche 7, die hohen Fertigungstoleranzen, insbesondere hinsichtlich der Ebenheit, unterliegt, auswirken. Fertigungstoleranzen des Flansches und/oder des Befestigungsbereichs 5, die zu den störenden Materialverformungen führen können, sind also durch die Entkopplung 9 ausgleichbar.

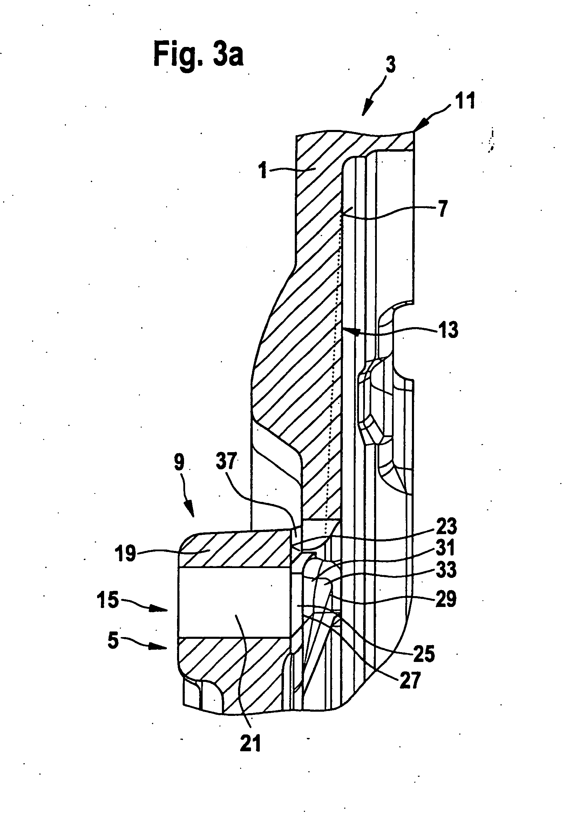

Die Funktionsweise der Entkopplung 9 des Schwungrades 1 wird im Folgenden anhand der Figuren 3a bis 3c, die verschiedene Detailansichten des in den Figuren 1 und 2 dargestellten Schwungrades 1 zeigen, beschrieben. Gleiche Teile sind mit gleichen Bezugsziffern versehen, so dass insofern auf die vorhergehenden Figuren verwiesen wird.

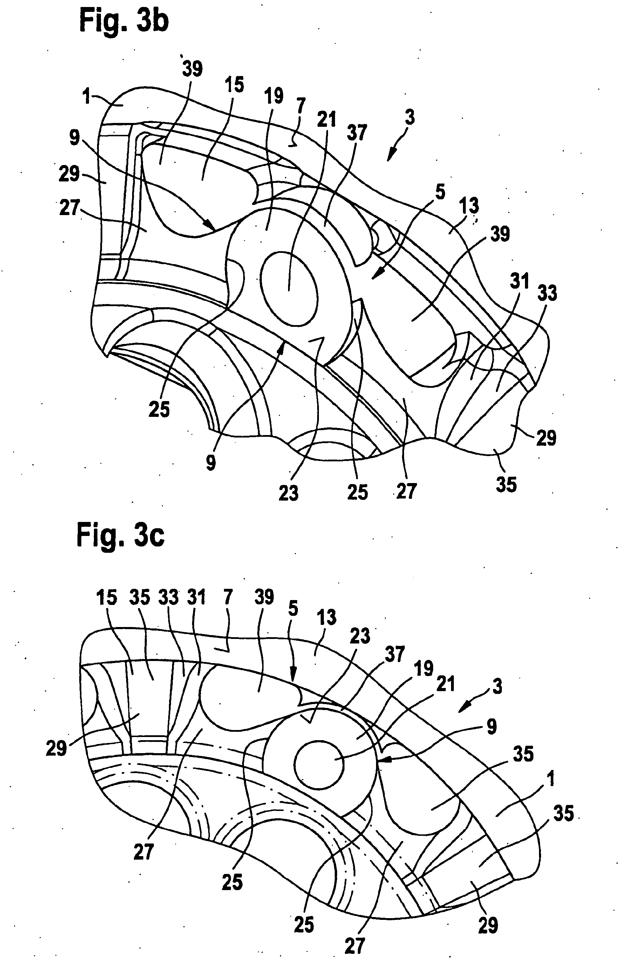

In den Figuren 3b und 3c ist eine Planfläche 23 der Hülse 19 der Entkopplung 9 zu erkennen, die in Figur 3a senkrecht zur Bildebene verläuft. Die Planfläche 23 kann beispielsweise mittels einer Fräsung hergestellt werden und setzt sich in Umfangsrichtung jeweils bis zu einer Stufe 25 fort, an der die Hülse 19 der Entkopplung 9 jeweils in einen Steg 27 übergeht. Die Stege 27 wiederum gehen an ihren von der Stufe 25 abgewandten Seiten jeweils in eine Rippe 29 über.

Die Schnittdarstellung gemäß Figur 3a lässt erkennen, dass die Materialdicke ausgehend von der Hülse 19 über die Stufe 25, den Steg 27 und ansteigenden Flanken 31, 33 der Rippe 29 zunimmt. Die Flanken 31 und 33 und eine obere Seite 35 der Rippe 29 sind derart gegen die Drehebene und einer gedachten Durchmesserlinie des Schwungrades 1 geneigt, dass sich die Rippe 29 konisch radial zur Mittelachse M des Schwungrades 1 hin verjüngt und von dem Niveau relativ zu einer gedachten Drehebene um die Mittelachse 11, in der die Reibfläche 7 liegt, auf das Niveau einer weiteren gedachten Drehebene um die Mittelachse 11, in der die in Figur 3c sichtbare Seite des Steges 27 liegt, abfällt.

Es ist zu erkennen, dass der Bereich der Hülse 19 mit der Bohrung 21 und der Planfläche 23, die als Anlagefläche für den hier nicht dargestellten Niet dienen kann, im Vergleich zu dem Steg 27 und zu der Rippe 29, die geringste Materialstärke aufweist. Etwaige Verformungen, die beim Einbringen des Nietes auftreten können, können so zu gezielten Verformungen dieser bewusst am schwächsten ausgelegten Stelle führen, ohne dass sich diese über den deutlich stärker ausgelegten Steg 27 und die wiederum stärker ausgelegte Rippe 29 auf den zweiten Funktionsbereich 13 mit der Reibfläche 7 übertragen.

Dass die Hülse 19 und der zweite Funktionsbereich 13 mit der Reibfläche 7 weitestgehend mechanisch entkoppelt sind, zeigt sich auch daran, dass diese zwar unmittelbar benachbart zueinander an dem Grenzbereich zwischen dem zweiten und dritten Funktionsbereich 13, 15 angebracht sind, jedoch durch einen Luftspalt 37, der jeweils in Umfangsrichtung in zwei Durchbrüche 39 übergeht, voneinander getrennt sind. So ist es praktisch ausgeschlossen, dass sich hinzunehmende elastische und/oder plastische Verformungen des Befestigungsbereichs 5, insbesondere der Hülse 19, über die Stege 27 und die Rippen 29 bis hin zur Reibfläche 7 übertragen und sich dort störend bemerkbar machen.

Dies ermöglicht es, auf einfache Art und Weise das Schwungrad 1 mit anderen Teilen, insbesondere einem hier nicht dargestellten Flansch, zu verbinden. Weitere Prozessschritte, insbesondere eine Nachbearbeitung der Reibfläche 7, um deren Oberflächenqualität wieder herzustellen, sind hierzu nicht notwendig. Bevorzugt handelt es sich bei der Reibfläche 7 um eine Guss-Rohfläche.

Figur 4 zeigt einen Teilausbruch eines Zweimassenschwungrades 3 mit einem auch als Sekundärschwungrad bezeichneten Schwungrad 1. Figur 5 zeigt einen Schnitt des in Figur 4 dargestellten Zweimassenschwungrades 3 entlang der Linie V-V. Gleiche Teile sind mit gleichen Bezugsziffern versehen, so dass insofern auf die Beschreibung der vorhergehenden Figuren verwiesen wird.

Figur 4 zeigt das Zweimassenschwungrad 3 in Draufsicht auf das Schwungrad 1, so wie dieses in Figur 1 dargestellt ist. Das Schwungrad 1 ist mit einem Geberzahnkranz 41, der an den ersten Funktionsbereich 11 angrenzt, und mit einem Flansch 43 gekoppelt. Der Flansch 43 und das Schwungrad 1 sind über die Bohrung 21 der Hülse 19 des Befestigungsbereiches 5 des dritten Funktionsbereiches 15 des Schwungrades 1 und Bohrungen 45 des Flansches 43, insbesondere unter Zuhilfenahme zumindest eines Nietes 46, miteinander koppelbar, so dass die Kräfte und/oder Drehmomente übertragen werden können. Der Flansch 43 und das Schwungrad 1 sind Teile einer sekundären rotierenden Masse, die über zumindest ein Federelement 49 mit einer primären rotierenden Masse 51 so gekoppelt ist, dass diese relativ gegeneinander verdrehbar sind. Die primär rotierende Masse 51 kann einer Motorwelle, insbesondere einer Kurbelwelle eines Verbrennungsmotors zugeordnet werden. Die sekundäre rotierende Masse 47 wiederum kann, wie bereits zuvor beschrieben, über die einen Teil einer Trockenkupplung realisierenden Reibfläche 7 mit einer Abtriebswelle, insbesondere einer Getriebeeingangswelle, gekoppelt werden. Vorzugsweise handelt es sich bei dem Zweimassenschwungrad 3 um ein solches für Kraftfahrzeuge, insbesondere zur Dämpfung von im Triebstrang auftretenden Drehmomentspitzen und Torsionsschwingungen. Der genaue Aufbau und die Funktionsweise von Zweimassenschwungrädern ist bekannt, so dass an dieser Stelle nicht weiter darauf eingegangen wird.

## Patentansprüche

1. Zweimassenschwungrad mit einer Primärmasse (51) und einer gegenüber dieser verdrehbaren Sekundärmasse (47), wobei die beiden Massen (47, 51) zumindest über ein Federelement (49) antriebsmäßig gekoppelt sind, wobei das Federelement (49) mittels eines mit der Sekundärmasse (47) verbundenen Flansches (43) beaufschlagbar ist und die Befestigungsbereiche (5) zwischen der Sekundärschwungmasse (47) und dem Flansch (43) radial innerhalb einer Reib-fläche (7) der Sekundärschwungmasse (47) vorgesehen sind, **dadurch** gekenn-zeichnet, dass die Sekundärschwungmasse (47) radial innerhalb der Reibfläche (7) axiale Durchlässe (37 + 39) aufweist und die radial innerhalb dieser Durchlässe vorhandenen Bereiche (9; 5, 27) der Sekundärschwungmasse mit den radial außerhalb dieser Durchlässe (37 + 39) vorhandenen Bereichen (13) über radiale Rippen (29) miteinander verbunden sind und die Befestigungsbereiche (5), in Umfangsrichtung des Schwungrades betrachtet, jeweils radial inner-halb der Durchlässe und zwischen zwei radialen Rippen (29) vorgesehen sind, wodurch eine Entkoppelung zwischen Reibfläche (7) und Befestigungsbereichen (5) vorhanden ist.

2. Zweimassenschwungrad nach Anspruch 1, **dadurch gekennzeichnet, dass** die Durchlässe (37 + 39) durch zwei Durchbrüche (39), die über einen Luftspalt (37) miteinander verbunden sind, gebildet sind.

3. Zweimassenschwungrad nach Anspruch 2, **dadurch gekennzeichnet, dass** die Befestigungsbereiche (5) jeweils radial innerhalb eines Luftspaltes (37) angeordnet sind.

4. Zweimassenschwungrad nach Anspruch 1, **dadurch gekennzeichnet, dass** die radial innerhalb der Durchlässe (37 + 39) vorhandenen Bereiche (9; 5, 27) in Umfangsrichtung verlaufende Stege (27) bilden.

5. Zweimassenschwungrad nach Anspruch 4, **dadurch gekennzeichnet, dass** die Stege (27) übergehen in die radialen Rippen (29).

6. Zwejmassenschwungrad nach Anspruch 4, **dadurch gekennzeichnet, dass** jeweils zwischen zwei in Umfangsrichtung aufeinander zuweisenden Stegen (27) ein Befestigungsbereich (5) vorhanden ist mit einer axialen Öffnung (21) zur Herstellung einer Nietverbindung (46).

## Claims

1. Dual-mass flywheel having a primary mass (51) and a secondary mass (47) which can be rotated with respect to the former, the two masses (47, 51) being drive-coupled to one another at least via a spring element (49), it being possible for the spring element (49) to be loaded by means of a flange (43) which is connected to the secondary mass (47) and the fastening regions (5) between the secondary flywheel mass (47) and the flange (43) being provided radially within a friction face (7) of the secondary flywheel mass (47), **characterized in that** the secondary flywheel mass (47) has axial passages (37 + 39) radially within the friction face (7), and those regions (9; 5, 27) of the secondary flywheel mass which are present radially within the said passages are connected via radial ribs (29) to the regions (13) which are present radially outside the said passages (37 + 39), and , as viewed in the circumferential direction of the flywheel, the fastening regions (5) are provided in each case radially within the passages and between two radial ribs (29), as a result of which there is a decoupling between the friction face (7) and the fastening regions (5).

2. Dual-mass flywheel according to Claim 1, **characterized in that** the passages (37 + 39) are formed by two apertures (39) which are connected to one another via an air gap (37).

3. Dual-mass flywheel according to Claim 2, **characterized in that** the fastening regions (5) are arranged in each case radially within an air gap (37).

4. Dual-mass flywheel according to Claim 1, **characterized in that** the regions (9; 5, 27) which are present radially within the passages (37 + 39) form webs (27) which extend in the circumferential direction.

5. Dual-mass flywheel according to Claim 4, **characterized in that** the webs (27) merge into the radial ribs (29).

6. Dual-mass flywheel according to Claim 4, **characterized in that**, in each case between two webs (27) which point towards one another in the circumferential direction, there is a fastening region (5) having an axial opening (21) for producing a riveted connection (46).

## Revendications

1. Volant d'inertie à deux masses, comprenant une masse primaire (51) et une masse secondaire (47) pouvant tourner par rapport à celle-ci, les deux masses (47, 51) étant accouplées en entraînement au moins par le biais d'un élément de ressort (49), l'élément de ressort (49) pouvant être sollicité au moyen d'une bride (43) connectée à la masse secondaire (47), et les régions de fixation (5) entre la masse d'inertie secondaire (47) et la bride (43) étant prévues radialement à l'intérieur d'une surface de frottement (7) de la masse d'inertie secondaire (47), **caractérisé en ce que** la masse d'inertie secondaire (47) présente, radialement à l'intérieur de la surface de frottement (7), des passages axiaux (37 + 39), et les régions (9 ; 5, 27) de la masse d'inertie secondaire, situées radialement à l'intérieur de ces passages, sont connectées aux régions (13) situées radialement à l'extérieur de ces passages (37 + 39), par le biais de nervures radiales (29), et les régions de fixation (5), considérées dans la direction périphérique du volant d'inertie, sont à chaque fois prévues radialement à l'intérieur des passages et entre deux nervures radiales (29), de sorte qu'un désaccouplement soit obtenu entre la surface de frottement (7) et les régions de fixation (5).

2. Volant d'inertie à deux masses selon la revendication 1, **caractérisé en ce que** les passages (37 + 39) sont formés par deux orifices (39) qui sont connectés l'un à l'autre par le biais d'un entrefer (37).

3. Volant d'inertie à deux masses selon la revendication 2, **caractérisé en ce que** les régions de fixation (5) sont à chaque fois disposées radialement à l'intérieur d'un entrefer (37).

4. Volant d'inertie à deux masses selon la revendication 1, **caractérisé en ce que** les régions (9 ; 5, 27) situées radialement à l'intérieur de ces passages (37 + 39) forment des nervures (27) s'étendant dans la direction périphérique.

5. Volant d'inertie à deux masses selon la revendication 4, **caractérisé en ce que** les nervures (27) se prolongent dans les nervures radiales (29).

6. Volant d'inertie à deux masses selon la revendication 4, **caractérisé en ce qu'**une région de fixation (5) est à chaque fois prévue entre deux nervures (27) tournées l'une vers l'autre dans la direction périphérique, avec une ouverture axiale (21) pour créer une connexion rivetée (46).
